# EUROPEAN PATENT SPECIFICATION

(11) **EP 0 393 790 B1**
(45) Date of publication and mention of the grant of the patent: **21.12.1994**
(21) Application number: 90200961.2
(22) Date of filing: 18.04.1990
(51) Int. Cl.: C08G 67/02

(54) **Preparation of copolymers of carbon monoxide**
Herstellung von Kohlenmonoxid-Copolymeren
Préparation des copolymères de monoxyde de charbon

(30) Priority: 19.04.1989 NL 8900978
(43) Date of publication of application: 24.10.1990
(73) Proprietor: SHELL INTERNATIONALE RESEARCH MAATSCHAPPIJ B.V., 2596 HR Den Haag (NL)
(72) Inventor: van Leeuwen, Petrus Wilhelmus Nicolaas Maria, NL-1031 CM Amsterdam (NL); Roobeek, Cornelis Franciscus, NL-1031 CM Amsterdam (NL); Wong, Pui Kwan, NL-2596 HR Den Haag (NL)

(56) References cited:
- EP-A- 0 296 687
- EP-A- 0 305 011

## Description

The invention relates to a process for the preparation of copolymers of carbon monoxide with one or more mono-olefins.

Linear copolymers of carbon monoxide with ethene, in which copolymers the units originating in carbon monoxide on the one hand and the units originating in ethene on the other hand, occur in alternating order, can be prepared by contacting the monomers with a solution of a catalyst composition in a diluent which consists at least partly of a lower aliphatic alcohol, while the catalyst composition is based upon
a) a palladium compound,
b) an anion of an acid with a pKa of less than 2, and
c) a bisphosphine of the general formula (R¹)₂P-R-P(R¹)₂, wherein R¹ is an optionally polar-substituted aromatic hydrocarbyl group and R is a bivalent organic bridging group which contains at least two carbon atoms in the bridge that connects the two phosphorus atoms.

From EP-A-239145 it is known that in the copolymerization mentioned hereinbefore, the catalyst compositions show high polymerizing activities which can be still enhanced by carrying out the copolymerization in the presence of a 1,4-quinone.

Recently, the Applicant conducted an investigation into whether the above-mentioned catalyst compositions could be considered for use in the preparation of linear copolymers of carbon monoxide with one or more mono-olefins having at least three carbon atoms in the molecule (for the sake of brevity referred to as C₃₊ mono-olefins), in which polymers the units originating in carbon monoxide on the one hand and the units originating in the applied C₃₊ mono-olefins on the other hand, occur in alternating order. It was found in the investigation that such polymers can indeed be prepared, but that the catalyst compositions display poor polymerizing activities as compared with the activities observed during the copolymerization of carbon monoxide with ethene. During the investigation it was also found that the polymerizing activities of the afore-mentioned catalyst compositions for copolymerizing carbon monoxide with one or more C₃₊ mono-olefins can be much improved by replacing in these compositions the bisphosphine of the general formula (R¹)₂P-R-P(R¹)₂ mentioned as component c) with a bisphosphine of the general formula (R²)₂P-R-P(R²)₂, wherein R² is an optionally polar-substituted aliphatic hydrocarbyl group and R has the meaning given hereinbefore. It appeared that the polymerizing activities of these catalyst compositions, too, could be further enhanced by carrying out the polymerization in the presence of a 1,4-quinone.

During further research done by the Applicant into the application of catalyst compositions which comprise a bisphosphine of the general formula (R²)₂P-R-P(R²)₂ for polymerizing carbon monoxide with one or more C₃₊ mono-olefins, it has now been found that an increase in polymerizing activity can be achieved by carrying out the polymerization not in the presence of a 1,4-quinone, but in the presence of a compound of the general formula C(X)(Y)(OR³)₂, wherein X is hydrogen or a hydrocarbyl group, Y is hydrogen or a hydrocarbyl group or a group OR³, and R³ is a hydrocarbyl group. This find is surprising in view of the fact that when the afore-mentioned copolymerization of carbon monoxide with ethene by using a catalyst composition comprising a bisphosphine of the general formula (R¹)₂P-R-P(R¹)₂ is carried out in the presence of a compound of the general formula C(X)(Y)(OR³)₂, the polymerizing activity is reduced.

The present patent application therefore relates to a process for the preparation of copolymers of carbon monoxide with one or more mono-olefins, in which process a mixture of carbon monoxide with one or more C₃₊ mono-olefins is contacted in the presence of a compound of the general formula C(X)(Y)(OR³)₂ with a solution of a catalyst composition in a diluent, which diluent consists at least partly of a lower aliphatic alcohol, and which catalyst composition is based on the afore-mentioned components a) and b) and a bisphosphine of the general formula (R²)₂P-R-P(R²)₂, as component c).

The polymer preparation of the invention is preferably carried out at a temperature of from 20 to 100°C, a pressure of from 5 to 150 bar and by using such a quantity of catalyst composition as to contain from 10⁻⁷ to 10⁻³ mol of palladium per mol of olefin to be polymerized. Particularly preferred is a preparation carried out at a temperature of from 30 to 85°C, a pressure of from 20 to 100 bar and by using such a quantity of catalyst composition as to contain from 10⁻⁶ to 10⁻⁴ mol of palladium per mol of olefin to be polymerized. The molar ratio of the olefins relative to carbon monoxide in the mixture to be polymerized is preferably 10:1-1:10 and in particular 5:1-1:5. The diluent used in the process of the invention consists at least partly of a lower aliphatic alcohol. Very suitable diluents are liquids which consist exclusively of one or more lower aliphatic alcohols such as methanol as well as liquids which consist of a mixture of a lower aliphatic alcohol and a cyclic ether, such as a mixture of methanol and tetrahydrofuran.

In the process of the invention, the monomers are contacted with the catalyst composition in the presence of a compound of the general formula C(X)(Y)(OR³)₂. If the groups X and/or Y are hydrocarbyl groups, preference is given to compounds in which these groups have up to 6 carbon atoms. Preference is further given to compounds in which R³ has up to 4 carbon atoms. As examples of compounds of the general formula C(X)(Y)(OR³)₂ which may be considered for use in the process of the invention may be mentioned:
1. compounds in which X and Y are both hydrogen, such as diethoxymethane,
2. compounds in which X is hydrogen and Y is a hydrocarbyl group, such as 1,1-dimethoxyethane,
3. compounds in which X and Y are both hydrocarbyl groups, such as 2,2-dimethoxypropane,
4. compounds in which X is hydrogen and Y is an OR³ group, such as trimethoxymethane, and
5. compounds in which X is a hydrocarbyl group and Y is an OR³ group, such as 1,1,1-trimethoxyethane and trimethoxymethylbenzene.

The preferred compound of the general formula C(X)(Y)(OR³)₂ is trimethoxymethane. The compound of the general formula C(X)(Y)(OR³)₂ is preferably used in the process of the invention in a quantity of from 100 to 5000 and in particular of from 500 to 3000 mol per mol of palladium.

The palladium compound employed in the catalyst composition as component a) is preferably a palladium salt of a carboxylic acid, and palladium acetate in particular. Examples of suitable acids with a pKa of less than 2 (determined in aqueous solution at 18°C) are mineral acids, such as perchloric acid, sulphonic acids, such as para-toluenesulphonic acid and halogen carboxylic acids, such as trifluoro acetic acid. Component b) may be incorporated in the catalyst compositions in the form of an acid and/or in the form of a salt. A very suitable acid is para-toluenesulphonic acid and a very suitable salt is nickel perchlorate. Mixtures of acids and salts may also be used, such as a mixture of para-toluenesulphonic acid and nickel perchlorate. The quantity of component b) present in the catalyst compositions is preferably from 0.5 to 50 mol and in particular from 1 to 25 mol per mol of palladium.

In the bisphosphines of the general formula (R²)₂P-R-P(R²)₂ that are eligible for use as components c) in the catalyst compositions, R² is preferably an alkyl group with up to 10 carbon atoms. For the bridging group R present in the bisphosphines, preference is given to bridging groups which contain three atoms in the bridge that connects the two phosphorus atoms. Examples of suitable bridging groups R are the -CH₂-CH₂-CH₂-group, the -CH₂-C(CH₃)₂-CH₂-group and the -CH₂-Si(CH₃)₂-CH₂-group. Preferably, the bisphosphines are used in the catalyst compositions in a quantity of from 0.5 to 2 and in particular of from 0.75 to 1.5 mol per mol of palladium.

As monomers which can be copolymerized with carbon monoxide in accordance with the invention, it is preferred to use C₃₊ mono-olefins having up to 10 carbon atoms in the molecule. Further, it is preferred to prepare copolymers of carbon monoxide with only one C₃₊ mono-olefin. In the present process, "mono-olefins" are defined as linear, branched and cyclic alkenes. Examples of suitable C₃₊ mono-olefins are propene, pentene-1, 4-methyl-pentene-1 and cyclopentenes that are optionally alkyl-substituted in the 3, 4 and/or 5 position, such as cyclopentene, 3-methylcyclopentene and 3,5-dimethylcyclopentene. Special preference is given to copolymers of carbon monoxide with either propene, or cyclopentene.

The invention will now be illustrated with the aid of the following examples.

### Example 1

A carbon monoxide/propene copolymer was prepared as follows. A stirred autoclave with a capacity of 300 ml which contained 110 ml of tetrahydrofuran and 87 ml of propene and whose contents had been brought to 42°C, was pressurized with carbon monoxide until a pressure of 40 bar was reached. Then, the autoclave was charged with a palladium-containing solution comprising
8.5 ml methanol,
21.5 ml tetrahydrofuran,
0.052 mmol palladium acetate,
0.264 mmol nickel perchlorate, and
0.063 mmol 1,3-bis(di(n-butyl)phosphino)propane.

Polymerization was terminated after 140 hours by cooling the reaction mixture to room temperature and releasing the pressure. The reaction mixture was stirred into methanol and the copolymer was filtered off, washed with methanol and dried.

11.5 g of copolymer was obtained. The polymerization rate was 15 g copolymer/g palladium.hour.

### Example 2

A carbon monoxide/propene copolymer was prepared substantially in the same way as in Example 1, except for the following differences
a) the autoclave in addition comprised 2 ml of trimethoxymethane and 10 mg of para-toluenesulphonic acid,
b) a palladium-containing solution was used which comprised
   8.5 ml methanol
   21.5 ml tetrahydrofuran,
   0.043 mmol palladium acetate,
   0.212 mmol nickel perchlorate, and
   0.052 mmol 1,3-bis(di(n-butyl)-phosphino)propane,
   and
c) the reaction time was 15.35 instead of 140 hours.

9.54 g of copolymer was obtained. The polymerization rate was 140 g copolymer/g palladium.-hour.

### Example 3

A carbon monoxide/propene copolymer was prepared substantially in the same way as in Example 1, except for the following differences
(a) the autoclave comprised 120 ml of methanol instead of tetrahydrofuran and 80 ml instead of 87 ml of propene,
b) the autoclave in addition comprised 2 ml of trimethoxymethane and 3 mg of para-toluenesulphonic acid,
c) a palladium-containing solution was used which comprised
   8.5 ml methanol,
   21.5 ml tetrahydrofuran,
   0.051 mmol palladium acetate,
   0.1 mmol para-toluenesulphonic acid, and
   0.06 mmol 1,3-bis(di(n-butyl)phosphino)propane,
   and
d) the reaction time was 17.53 instead of 140 hours.

31.11 g of copolymer was obtained. The polymerization rate was 330 g copolymer/g palladium.hour.

### Example 4

A carbon monoxide/propene copolymer was prepared substantially in the same way as in Example 1, except for the following differences
a) the autoclave comprised 120 ml of methanol instead of tetrahydrofuran and 80 ml instead of 87 ml of propene,
b) the autoclave in addition comprised 2 ml of trimethoxymethane and 10 mg of para-toluenesulphonic acid,
c) a palladium-containing solution was used which comprised
   8.5 ml methanol,
   21.5 ml tetrahydrofuran,
   0.043 mmol palladium acetate,
   0.212 mmol nickel perchlorate, and
   0.052 mmol 1,3-bis(di(n-butyl)phosphino)propane,
   and
d) the reaction time was 29.2 instead of 140 hours.

63 g of copolymer was obtained. The polymerization rate was 470 g copolymer/g palladium.hour.

### Example 5

A carbon monoxide/cyclopentene copolymer was prepared substantially in the same way as the carbon monoxide/propene copolymer of Example 1, except for the following differences
a) the autoclave comprised 120 ml of methanol instead of tetrahydrofuran and 85 ml of cyclopentene instead of propene,
b) the autoclave in addition comprised 3.5 ml of trimethoxy methane and 0.093 mmol of para-toluenesulphonic acid,
c) the reaction temperature was 40°C instead of 42°C,
d) carbon monoxide was blown in until a pressure of 60 bar instead of 40 bar was reached,
e) a palladium-containing solution was used which comprised
   8.5 ml methanol,
   21.5 ml tetrahydrofuran,
   0.043 mmol palladium acetate, and
   0.052 mmol 1,3-bis(di(n-butyl)phosphino)propane,
   and
f) the reaction time was 66 instead of 140 hours.

2.8 g of copolymer was obtained. The polymerization rate was 5.1 g copolymer/g palladium.hour.

### Example 6

A carbon monoxide/ethene copolymer was prepared as follows. A stirred autoclave with a capacity of 250 ml was charged with a palladium-containing solution comprising
100 ml methanol,
0.1 mmol palladium acetate,
0.2 mmol para-toluenesulphonic acid, and
0.1 mmol 1,3-bis(diphenyl-phosphino)propane.

A 1:1 carbon monoxide/ethene mixture was then blown into the autoclave until a pressure of 50 bar was reached. Finally, the contents of the autoclave were brought to a temperature of 90°C. Polymerization was terminated after 1 hour, by cooling to room temperature and releasing the pressure. The copolymer formed was filtered off, washed with methanol and dried.

17.8 g of copolymer was obtained. The polymerization rate was 1.8 kg copolymer/g palladium.hour.

### Example 7

A carbon monoxide/ethene copolymer was prepared substantially in the same way as in Example 6, except that now the palladium-containing solution in addition comprised 2 ml of trimethoxymethane.

13.5 g of copolymer was obtained. The polymerization rate was 1.3 kg copolymer/g palladium.hour.

Of Examples 1-7, Examples 2-5 are in accordance with the invention. In these Examples, the preparation of copolymers of carbon monoxide with a C₃₊ mono-olefin was effected by contacting the monomers in the presence of trimethoxymethane, with a catalyst composition which comprised 1,3-bis(di(n-butyl)phosphino)propane as the bisphosphine and which catalyst composition was dissolved in a diluent consisting partly of methanol.

Examples 1, 6 and 7 fall outside the scope of the invention and have been included herein for comparison. Comparison of the results of Examples 1 and 2 clearly demonstrates the favourable influence which carrying out the polymerization in the presence of a compound of the general formula C(X)(Y)(OR³)₂ has on polymerization activities. When the polymerization is carried out in the presence of trimethoxymethane, the polymerization rate increases by a factor of 9.

The results of Examples 6 and 7 demonstrate that when a catalyst composition comprising 1,3-bis(diphenylphosphino)propane as bisphosphine is employed to prepare carbon monoxide/ethene copolymers, carrying out the polymerization in the presence of a compound of the general formula C(X)(Y)(OR³)₂ has an unfavourable effect on polymerization activities. When polymerization is carried out in the presence of trimethoxymethane, the polymerization rate goes down from 1.8 to 1.3 kg copolymer/g palladium.hour.

With the aid of ¹³C-NMR analysis, it was established that the copolymers prepared according to Examples 1-7 had a linear structure and that the units originating in carbon monoxide on the one hand, and the units originating in propene, cyclopentene and ethene, respectively, on the other hand, occurred in alternating order.

## Claims

1. Process for the preparation of copolymers of carbon monoxide with one or more mono-olefins, characterized in that a mixture of carbon monoxide with one or more mono-olefins having at least three carbon atoms in the molecule is contacted in the presence of a compound of the general formula C(X)(Y)(OR³)₂ with a solution of a catalyst composition in a diluent, which diluent consists at least partly of a lower aliphatic alcohol, and which catalyst composition is based on:
a) a palladium compound,
b) an anion of an acid with a pKa of less than 2, and
c) a bisphosphine of the general formula
(R²)₂P-R-P(R²)₂,
in which general formulae the letters used have the following meanings:
X = hydrogen or a hydrocarbyl group,
Y = hydrogen or a hydrocarbyl group or a group OR³,
R³ = a hydrocarbyl group
R² = an optionally polar-substituted aliphatic hydrocarbyl group, and
R = a bivalent organic bridging group having at least two carbon atoms in the bridge that connects the two phosphorus atoms.

2. Process as claimed in claim 1, characterized in that it is carried out at a temperature of from 20 to 100°C, a pressure of from 5 to 150 bar, a molar ratio of the olefins relative to carbon monoxide in the mixture to be polymerized of from 10:1 to 1:10 and by using a quantity of catalyst composition which, per mol of olefin to be polymerized, contains 10⁻⁷ to 10⁻³ mol of palladium.

3. Process as claimed in claim 1 or 2, characterized in that the diluent used is methanol or a mixture of methanol and tetrahydrofuran.

4. Process as claimed in one or more of claims 1-3, characterized in that when a compound of the general formula C(X)(Y)(OR³)₂ is used in which the groups X and/or Y are hydrocarbyl groups, these groups have up to 6 carbon atoms.

5. Process as claimed in one or more of claims 1-4, characterized in that group R³ in the compounds of the general formula C(X)(Y)(OR³)₂ has up to 4 carbon atoms.

6. Process as claimed in one or more of claims 1-5, characterized in that trimethoxymethane is used as the compound of the general formula C(X)(Y)(OR³)₂.

7. Process as claimed in one or more of claims 1-6, characterized in that the compound of the general formula C(X)(Y)(OR³)₂ is used in a quantity of from 100 to 5000 mol per mol of palladium.

8. Process as claimed in one or more of claims 1-7, characterized in that a catalyst composition is employed which comprises 0.5 to 50 mol of component b) and 0.5 to 2 mol of component c) per mol of palladium.

## Patentansprüche

1. Verfahren zur Herstellung von Copolymeren aus Kohlenmonoxid und einem oder mehreren Monoolefin(en), dadurch gekennzeichnet, daß eine Mischung aus Kohlenmonoxid und einem oder mehreren Monoolefin(en) mit mindestens 3 Kohlenstoffatomen im Molekül in Anwesenheit einer Verbindung der allgemeinen Formel C(X)(Y)(OR³)₂ mit einer Lösung einer Katalysatorzusammensetzung in einem Verdünnungsmittel kontaktiert wird, welches Verdünnungsmittel mindestens teilweise aus einem niederen aliphatischen Alkohol besteht, und welche Katalysatorzusammensetzung auf
a) einer Palladiumverbindung,
b) einem Anion einer Säure mit einem pKa-Wert von weniger als 2 und
c) einem Bisphosphin der allgemeinen Formel (R²)₂P-R-P(R²)₂ basiert,
in welchen allgemeinen Formeln die verwendeten Buchstaben die nachstehenden Bedeutungen haben:
X = Wasserstoff oder eine Kohlenwasserstoffgruppe,
Y = Wasserstoff oder eine Kohlenwasserstoffgruppe oder eine Gruppe OR³,
R³ = eine Kohlenwasserstoffgruppe,
R² = eine gegebenenfalls polarsubstituierte aliphatische Kohlenwasserstoffgruppe und
R = eine zweiwertige organische Brückengruppe, welche mindestens zwei Kohlenstoffatome in der Brücke aufweist, welche die beiden Phosphoratome miteinander verbindet.

2. Verfahren wie in Anspruch 1 beansprucht, dadurch gekennzeichnet, daß es bei einer Temperatur im Bereich von 20 bis 100°C, einem Druck im Bereich von 5 bis 150 bar, einem Molverhältnis der Olefine relativ zum Kohlenmonoxid in der zu polymerisierenden Mischung im Bereich von 10:1 bis 1:10 und unter Verwendung einer solchen Menge an Katalysatorzusammensetzung durchgeführt wird, welche je Mol des zu polymerisierenden Olefins 10⁻⁷ bis 10⁻³ Mol Palladium enthält.

3. Verfahren wie in Anspruch 1 oder 2 beansprucht, dadurch gekennzeichnet, daß das verwendete Verdünnungsmittel Methanol oder eine Mischung aus Methanol und Tetrahydrofuran ist.

4. Verfahren wie in irgendeinem oder mehreren der Ansprüche 1 bis 3 beansprucht, dadurch gekennzeichnet, daß bei Verwendung einer Verbindung der allgemeinen Formel C(X)(Y)(OR³)₂, in welcher die Gruppen X und/oder Y Kohlenwasserstoffgruppen bedeuten, diese Gruppen bis zu 6 Kohlenstoffatome enthalten.

5. Verfahren wie in irgendeinem oder mehreren der Ansprüche 1 bis 4 beansprucht, dadurch gekennzeichnet, daß die Gruppe R³ in den Verbindungen der allgemeinen Formel C(X)(Y)(OR³)₂ bis zu 4 Kohlenstoffatome aufweist.

6. Verfahren wie in irgendeinem oder mehreren der Ansprüche 1 bis 5 beansprucht, dadurch gekennzeichnet, daß Trimethoxymethan als die Verbindung der allgemeinen Formel C(X)(Y)(OR³)₂ eingesetzt wird.

7. Verfahren wie in einem oder mehreren der Ansprüche 1 bis 6 beansprucht, dadurch gekennzeichnet, daß die Verbindung der allgemeinen Formel C(X)(Y)(OR³)₂ in einer Menge von 100 bis 5000 Mol je Mol Palladium eingesetzt wird.

8. Verfahren wie in irgendeinem oder mehreren der Ansprüche 1 bis 7 beansprucht, dadurch gekennzeichnet, daß eine Katalysatorzusammensetzung verwendet wird, welche 0,5 bis 50 Mol der Komponente b) und 0,5 bis 2 Mol der Komponente c) je Mol Palladium enthält.

## Revendications

1. Procédé pour la préparation de copolymères du monoxyde de carbone avec une ou plusieurs mono-oléfines, caractérisé en ce qu'un mélange de monoxyde de carbone avec une ou plusieurs mono-oléfines ayant au moins trois atomes de carbone dans la molécule est mis en contact en présence d'un composé de la formule générale C(X)(Y)(OR³)₂ avec une solution d'une composition catalytique dans un diluant, lequel diluant consiste au moins partiellement en un alcool aliphatique inférieur, la composition catalytique étant à base de :
a) un composé du palladium,
b) un anion d'un acide d'un pKa de moins de 2, et
c) une bisphosphine de la formule générale
(R²)₂P-R-P(R²)₂,
les lettres utilisées dans les formules générales ci-dessus ayant les significations suivantes :
X = hydrogène ou un groupe hydrocarbyle,
Y = hydrogène ou un groupe hydrocarbyle ou un groupe OR³,
R³ = un groupe hydrocarbyle
R² = un groupe hydrocarbyle aliphatique portant éventuellement un ou des substituants polaires, et
R = un groupe organique bivalent formant pont ayant au moins deux atomes de carbone dans le pont qui relie les deux atomes de phosphore.

2. Procédé selon la revendication 1, caractérisé en ce qu'il est mis en oeuvre à une température comprise entre 20 et 100°C, une pression comprise entre 5 et 150 bars, avec un rapport molaire des oléfines au monoxyde de carbone dans le mélange à polymériser compris entre 10:1 et 1:10 et en utilisant une quantité de composition catalytique qui, par mole d'oléfine à polymériser, contient de 10⁻⁷ à 10⁻³ mole de palladium.

3. Procédé selon la revendication 1 ou 2, caractérisé en ce que le diluant utilisé est du méthanol ou un mélange de méthanol et de tétrahydrofuranne.

4. Procédé selon une ou plusieurs des revendications 1-3, caractérisé en ce que quand on utilise un composé de la formule générale C(X)(Y)(OR³)₂ dans lequel les groupes X et/ou Y sont des groupes hydrocarbyle, ces groupes ont au maximum 6 atomes de carbone.

5. Procédé selon une ou plusieurs des revendications 1-4, caractérisé en ce que le groupe R³ dans les composés de la formule générale C(X)(Y)(OR³)₂ a au maximum 4 atomes de carbone.

6. Procédé selon une ou plusieurs des revendications 1-5, caractérisé en ce qu'on utilise du triméthoxyméthane comme composé de la formule générale C(X)(Y)(OR³)₂.

7. Procédé selon une ou plusieurs des revendications 1-6, caractérisé en ce que le composé de la formule générale C(X)(Y)(OR³)₂ est utilisé dans une quantite comprise entre 100 et 5000 moles par mole de palladium.

8. Procédé selon une ou plusieurs des revendications 1-7, caractérisé en ce qu'on utilise une composition catalytique qui comprend de 0,5 à 50 moles de constituant b) et de 0,5 à 2 moles de constituant c) par mole de palladium.
